# EUROPÄISCHE PATENTANMELDUNG

(11) **EP 0 875 895 A2**
(43) Veröffentlichungstag der Anmeldung: **04.11.1998**
(21) Anmeldenummer: 98201368.2
(22) Anmeldetag: 28.04.1998
(51) Int. Cl.: G11B 27/32

(54) **Verfahren zur Kennzeichnung von Video-Daten und Video-Datenspeichern mit Mitteln zur Erzeugung eines Video-Daten-Codes**

(30) Priorität: 02.05.1997 DE 19718658
(71) Anmelder: Philips Patentverwaltung GmbH, 22335 Hamburg (DE); Koninklijke Philips Electronics N.V., 5621 BA Eindhoven (NL)
(72) Erfinder: Schmidt, Adam, c/o Philips Patentverwaltung GmbH, 22335 Hamburg (DE)
(74) Vertreter: von Laue, Hanns-Ulrich, Dipl.-Ing.

(57) **Zusammenfassung**

Für ein Verfahren zur Kennzeichnung von Video-Daten, welche in einem Video-Datenspeicher, vorzugsweise einem linearen Datenspeicher, mit einem Kennzeichnungscode, vorzugsweise einem Timecode, gekennzeichnet sind, sowie für einen entsprechenden Video-Datenspeicher ist erfindungsgemäß vorgesehen, daß für den Zugriff auf die Video-Daten durch externe Geräte der Kennzeichnungscode in einen Video-Daten-Code umgesetzt wird, in welchem die Video-Daten in Video-Dateien geordnet werden, deren Namen wenigstens Teile des jeweils zugeordneten Kennzeichnungscodes enthalten, und in welchem die Video-Dateien in Verzeichnissen geordnet werden, welche wenigstens Teile des jeweils zugeordneten Kennzeichnungscodes enthalten.

## Beschreibung

Die Erfindung betrifft ein Verfahren zur Kennzeichnung von Video-Daten, welche in einem Video-Datenspeicher, vorzugsweise einem linearen Datenspeicher, mit einem Kennzeichnungscode, vorzugsweise einem Timecode, gekennzeichnet sind, sowie einen Video-Datenspeicher, in welchem derartige Daten abgespeichert sind.

Bekannte Video-Datenspeicher, wie beispielsweise Video-Rekorder, aber auch diskbasierte Speichersysteme, kennzeichnen die Video-Daten üblicherweise mit einem Kennzeichnungscode, meist einem Timecode. Dieser Code kennzeichnet jedes einzelne Bild der Video-Daten in unverwechselbarer Weise. Damit kann anhand des Codes jedes einzelne Bild sicher identifiziert werden. In zunehmendem Umfang sollen auf derartigen Video-Dateinpeichern abgesicherte Video-Daten digital weiterverarbeitet werden. Dies geschieht meist in Rechnersystemen, beispielsweise auch in Personal-Computersystemen. Hierbei entsteht das Problem, daß die Betriebssysteme derartiger Rechnersysteme mit den Kennzeichnungscodes, mit denen die Video-Daten in dem Video-Datenspeicher gekennzeichnet sind, nicht arbeiten können bzw. diese nicht auswerten können.

Bei nach dem Stande der Technik bekannten Lösungen wird dieses Problem dadurch umgangen, daß die Video-Daten aus dem Video-Datenspeicher ohne Kennzeichnungscode ausgelesen werden und in einem weiteren Speicher, der beispielsweise der Speicher eines Rechners sein kann, mit dem die Daten weiterverarbeitet werden, wiederum zwischengespeichert werden. Bei dieser Zwischenspeicherung werden sie mit einem neuen Code versehen, den der Rechner, der die Daten weiterverarbeiten soll, verarbeiten kann. Diese Vorgehensweise hat den Nachteil, daß eine Zwischenspeicherung der Video-Daten erforderlich ist, bevor diese durch einen Rechner weiterverarbeitet werden können.

Es ist Aufgabe der Erfindung, ein Verfahren zur Kennzeichnung von Video-Daten bzw. einen Video-Datenspeicher anzugeben, bei denen eine Zwischenspeicherung der Video-Daten nicht erforderlich ist.

Für ein Verfahren wird diese Aufgabe erfindungsgemäß dadurch gelöst, daß für den Zugriff auf die Video-Daten durch externe Geräte der Kennzeichnungscode in einen Video-Daten-Code umgesetzt wird, in welchem die Video-Daten in Video-Dateien geordnet werden, deren Namen wenigstens Teile des jeweils zugeordneten Kennzeichmungscodes enthalten, und in welchem die Video-Dateien in Verzeichnissen geordnet werden, welche wenigstens Teile des jeweils zugeordneten Kennzeichnungscodes enthalten.

Damit externe Geräte, insbesondere Rechner, auf die Video-Daten gezielt zugreifen können, müssen die Video-Daten individuell gekennzeichnet sein. Hierzu wird ein in dem Video-Datenspeicher vorgesehener Kennzeichnungscode, bei dem es sich meist um einen Timecode handelt, durch einen neuen Video-Daten-Code ersetzt. Diese Umsetzung geschieht nur für externe Geräte; in dem Video-Datenspeicher selbst wird weiterhin mit dem Kennzeichnungscode bzw. dem Timecode gearbeitet, da dies in derartigen Geräten meist anders nicht möglich ist. Für extern Geräte wird dieser Code jedoch in den Video-Daten-Code umgesetzt, der so ausgelegt ist, daß er durch die Betriebssysteme der externen Geräte verarbeitet werden kann. Damit scheinen die Video-Daten in dem Video-Datenspeicher für die externen Geräte nicht durch den Kennziechnungscode bzw. Timecode gekennzeichnet zu sein, sondern durch den Video-Daten-Code. Die externen Geräte können anhand des Video-Daten-Codes gezielt auf bestimmte Video-Daten zugreifen.

Der Video-Daten-Code ist dabei so ausgelegt, daß die Video-Daten in Video-Dateien geordnet werden. Derartige Dateien haben ein Format, das Betriebssysteme angeschlossener Rechner lesen können. Zur Identifizierung der Video-Daten weisen die Namen der Video-Dateien Teile auf, die Elemente des Kennzeichnungscodes enthalten, mit denen die Video-Daten im Datenspeicher abgespeichert sind. Damit ist in dem Video-Datenspeicher jederzeit eine Zuordnung zwischen Kennzeichnungscode und Video-Daten-Code möglich. Die Dateien werden in Verzeichnissen geordnet, welche ebenfalls Elemente des Kennzeichnungscodes enthalten. Es wird hierdurch eine Dateien/Verzeichnerstruktur geschaffen, die einerseits von den externen Geräten lesbar ist und die andererseits innerhalb des Video-Datenspeichers aus dem Kennzeichnungscode erzeugt wird. Durch die Art der Kennzeichnung der Dateien/Verzeichnisse ist jederzeit eine Zuordnung zwischen dem Video-Daten-Code und dem Kennzeichnungscode möglich.

Gemäß einer Ausgestaltung der Erfindung ist für dieses Verfahren, bei dem als Kennzeichnungscode ein Timecode eingesetzt wird, vorgesehen, daß für den Video-Daten-Code je Teilbild des digitalen Bildsignals ein Dateiname erzeugt wird, welcher das Format DDHHMMSSFFLL.xxx aufweist, worin DD den Tages-, HH den Stunden-, MM den Minuten-, SS den Sekunden-, FF den Vollbild- und LL den Teilbild-Werten des Timecodes entsprechen.

In den Kennzeichnungscodes, die in Video-Datenspeichern üblicherweise verwendet werden, wird ein Timecode eingesetzt, bei dem jedes Teilbild aus einer Bildfolge eines digitalen Bildsignals individuell gekennzeichnet ist. Der Timecode enthält dabei im allgemeinen Angaben zu Tages-, Stunden-, Minuten-, Sekunden-, Vollbild- und Teilbild-Werten der Video-Daten. Damit ist eine unverwechselbare Kennzeichnung bis herunter auf Teilbildniveau möglich. Für die erfindungsgemäße Umsetzung des Kennzeichnungscodes in den Video-Daten-Code kann dessen Format, obwohl von Rechnern lesbar, so ausgelegt werden, daß es Elemente des Timecodes enthält. Damit ist auch anhand der Bezeichnungen der Video-Dateien anhand des Video-Daten-Codes eine Zuordnung zu den entsprechenden Werten des Timecodes möglich. Es bleibt jedoch der Vorteil erhalten, daß der Video-Daten-Code durch externe Rechner bzw. deren Betriebssysteme lesbar ist.

Hierzu ist gemäß einer weiteren Ausgestaltung der Erfindung vorgesehen, daß die Dateien in dem Video-Daten-Code in einer Verzeichnisstruktur geordnet werden, deren Verzeichnisnamen in absteigender Hierarchiefolge Tages-, Stunden-, Minuten-, Sekunden-, Vollbild- und Teilbild-Kennzeichnungen der Video-Dateien enthalten.

In Rechnersystemen werden Dateien im allgemeinen in einer hierarchischen Verzeichnerstruktur abgelegt. Für den Video-Daten-Code wird diese Verzeichnerstruktur in der Weise genutzt, daß übergeordnete Verzeichnisse bzw. deren Namen beispielsweise Elemente der Tageswerte des Timecodes enthalten. In der nächstniedrigeren Hierarchie der Verzeichnerstruktur des Video-Daten-Codes können die Verzeichnisnamen vorteilhaft Stundenwerte enthalten. Dies setzt sich fort bis zu Vollbild- oder Teilbild-Kennungen, die aus dem Kennzeichnungscode stammen, die jedoch als Elemente der Verzeichnisnamen in die Verzeichnerstruktur des Video-Daten-Codes umgesetzt werden.

Gemäß einer weiteren Ausgestaltung der Erfindung ist vorgesehen, daß ein an das Netzwerk angeschlossener Rechner, der auf den Video-Daten-Code zugreifen kann, in der Lage ist, in dem Video-Daten-Code vorgesehene Dateinamen zu verändern und/oder in dem Video-Daten-Code vorgesehene Dateien in andere in dem Video-Daten-Code vorgesehene Dateiverzeichnisse zu verschieben und daß in diesem Falle eine Zuordnungstabelle angelegt wird, in welcher die Veränderungen vermerkt werden und gemäß welcher der Video-Daten-Code für die betreffenden Dateien in veränderter Form ausgegeben wird.

Werden von einem extern angeschlossenen Rechner die Video-Daten aus dem Video-Datenspeicher anhand des Video-Daten-Codes ausgelesen und weiterverarbeitet, so besteht oftmals der Wunsch, Dateinamen zu verändern oder auch Dateinamen in andere Verzeichnisse zu verschieben. Dabei handelt es sich immer um die Dateinamen gemäß dem Video-Daten-Code bzw. der Verzeichnisstruktur gemäß diesem Code. Da der Kennzeichnungscode innerhalb des Video-Datenspeichers festliegt, kann dieser nicht verändert werden. Da es sich bei dem Video-Daten-Code jedoch ohnehin nur um eine Umsetzung des Kennzeichnungscodes in einen externen Code handelt, ist eine Veränderung des Kennzeichnungscodes in dem Video-Datenspeicher bei dem erfindungsgemäßen Verfahren auch nicht erforderlich. Statt dessen wird eine Zuordnungstabelle angelegt, in welcher gekennzeichnet ist, welche Dateinamen bzw. Verzeichnisnamen in dem Video-Daten-Code durch ein externes Gerät verändert wurden. Für diese Dateinamen bzw. Verzeichnisnamen wird dann nachfolgend der Name gemäß dieser Zuordnungstabelle als Video-Daten-Code ausgegeben. Dieser neue Video-Daten-Code ersetzt damit denjenigen Video-Daten-Code, der normalerweise aus dem Kennzeichnungscode, mit dem die Daten in dem Video-Datenspeicher abgespeichert sind, bestimmt wird.

Für externe Geräte ist damit eine Änderung des Video-Daten-Codes bezüglich Dateinamenänderungen bzw. Verzeichnisnamenänderungen möglich, ohne daß die Tatsache, daß der Kennzeichnungscode unveränderbar ist, störend in Erscheinung tritt.

Die oben bezeichnete Aufgabe ist für einen Video-Datenspeicher, in welchem Video-Daten, vorzugsweise linear, abgespeichert sind, welche mit einem Kennzeichnungscode, vorzugsweise einem Timecode, gekennzeichnet sind, dadurch gelöst, daß Mittel zur Erzeugung eines Video-Daten-Codes aus dem Kennzeichnungscode vorgesehen sind, welche an externe Geräte den Video-Daten-Code senden, gemäß welchem die Video-Daten in Video-Dateien geordnet werden, deren Namen wenigstens Teile des jeweils zugeordneten Kennzeichnungscodes enthalten, und gemäß welchem die Video-Dateien in Verzeichnissen geordnet werden, welche wenigstens Teile des jeweils zugeordneten Kennzeichnungscodes enthalten.

In den Video-Datenspeicher sind Mittel zur Erzeugung eines Video-Daten-Codes vorgesehen. Diese Mittel errechnen aus dem Kennzeichnungscode den Video-Daten-Code. Dieser Video-Daten-Code wird anstelle des Kennzeichnungscodes an externe Geräte gegeben und kennzeichnet individuell die Video-Daten in unverwechselbarer Weise.

Die Mittel dienen also zur Übersetzung des Kennzeichnungscodes in den Video-Daten-Code bzw. umgekehrt. Dabei ist der Video-Daten-Code in oben beschriebener Weise ausgeführt.

Gemäß einer weiteren Ausgestaltung der Erfindung ist für den Video-Datenspeicher vorgesehen, daß externe, insbesondere über ein Netzwerk angeschlossene, Geräte in der Lage sind, auf den Video-Daten-Code zuzugreifen und in dem Video-Daten-Code vorgesehene Dateinamen verändern und/oder in dem Video-Daten-Code vorgesehene Dateien in andere in dem Video-Daten-Code vorgesehene Dateiverzeichnisse zu verschieben, daß die Mittel zur Erzeugung des Video-Daten-Codes in diesem Falle eine Zuordnungstabelle anlegen, in welcher die Veränderungen vermerkt werden und daß die Mittel zur Erzeugung des Video-Daten-Codes den Video-Daten-Code für die betreffenden Dateien in gemäß der Zuordnungstabelle veränderter Form ausgeben.

In dem Falle, daß extern angeschlossene Rechner, die auf den Video-Daten-Code zugreifen, Dateinamen und/oder Verzeichnisnamen dieses Codes verändern, legen die Mittel zur Erzeugung des Video-Daten-Codes eine Zuordnungstabelle an. In dieser ist angegeben, durch welche neuen Dateinamen und/oder Verzeichnisnamen die ursprünglichen Dateinamen und/oder Verzeichnisnamen ersetzt wurden. Damit ist eine Veränderung des Kennzeichnungscodes nicht erforderlich. Nachfolgend werden bei der Ausgabe des Video-Daten-Codes die Veränderungen gemäß der Zuordnungstabelle berücksichtigt, so daß für externe Geräte scheinbar tatsächlich Dateinamen und/oder Verzeichnisnamen verändert wurden. Tatsächlich wurden nur bei der Umrechnung des Kennzeichnungscodes in den Video-Daten-Code die Änderungen der Dateinamen und/oder Verzeichnisnamen gemäß der Zuordnungstabelle berücksichtigt.

Nachfolgend wird ein Ausführungsbeispiel der Erfindung anhand der Zeichnung näher erläutert. Es zeigen:
Fig. 1 einen Video-Datenspeicher mit Mitteln zur Erzeugung eines Video-Daten-Codes,
Fig. 2 ein Beispiel für eine Verzeichnis- und Dateinamenstruktur des Video-Daten-Codes,
Fig. 3 ein Beispiel ähnlich Fig. 2 mit veränderten Dateinamen und
Fig. 4 ein Beispiel für eine Zuordnungstabelle, wie sie in dem Video-Datenspeicher gemäß Fig. 1 angelegt werden kann.

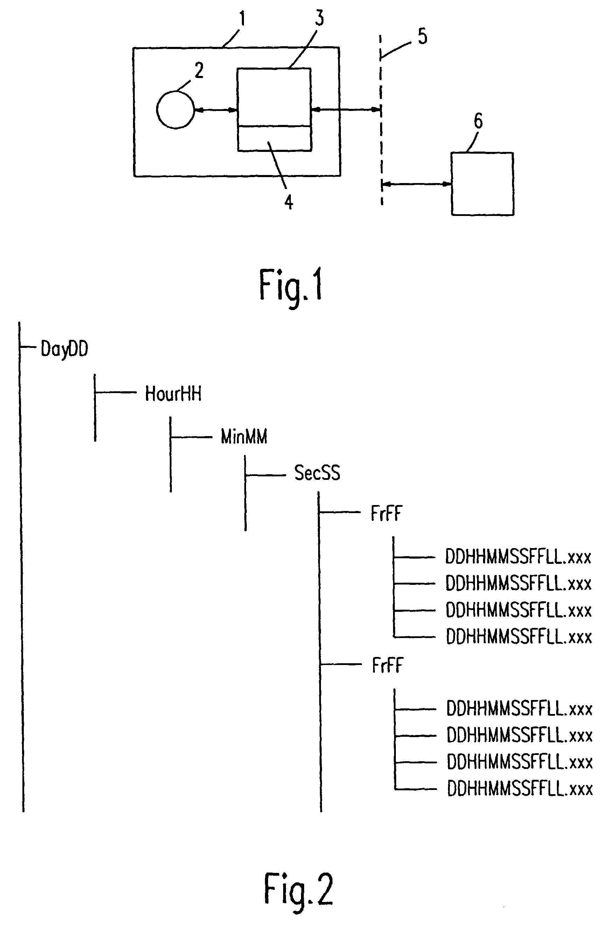

In Fig. 1 ist ein Video-Datenspeicher 1 schematisch angedeutet, in welchem Video-Daten abgespeichert werden können. Dies geschieht in einem linearen Speicher 2, bei dem es sich beispielsweise um ein Magnetband oder eine Speicherplatte handeln kann. In diesem linearen Speicher 2 sind die Daten in linearer Weise abgespeichert, d.h. die Video-Daten sind teilbildweise in fester Ordnung hintereinander abgespeichert.

In dem linearen Speicher 2 sind die Video-Daten mittels eines Kennzeichnungscodes, bei dem es sich insbesondere um einen Timecode handeln kann, gekennzeichnet. Ein derartiger Timecode kennzeichnet die Video-Daten teilbildweise in unverwechselbarer Weise. Dabei werden im allgemeinen Tages-, Stunden-, Minuten-, Sekunden, Vollbild- und Teilbild-Werte der einzelnen Teilbilder in den Timecode aufgenommen.

Externe Geräte, die Daten aus dem Video-Datenspeicher 1 auslesen wollen, können in dem Falle, daß es sich bei den externen Geräten um rechnerbasierte Geräte handelt, diesen Timecode nicht lesen. Um eine Zwischenspeicherung der Daten zu vermeiden, sind in dem Video-Datenspeicher 1 Mittel 3 zur Erzeugung eines Video-Daten-Codes vorgesehen. Die Mittel 3 übersetzen den Timecode, mit dem die Daten in dem linearen Speicher 2 gekennzeichnet sind, in einen Video-Daten-Code. Dieser Video-Daten-Code wird externen Geräten über einen in der Figur schematisch angedeuteten Datenbus 5 zur Verfügung gestellt. Auf diese Weise können ein externer Rechner 6 über den Datenbus 5 und die Mittel 3 auf die in dem linearen Speicher 2 zugeordneten Daten zugreifen, wobei die Daten nicht mittels des Kennzeichnungscodes bzw. Timecodes, sondern mittels des von den Mitteln 3 erzeugten Video-Daten-Codes gekennzeichnet sind. Für den externen Rechner 6 scheinen die Video-Daten damit mit dem Video-Daten-Code gekennzeichnet zu sein, den der Rechner 6 lesen kann. Der Rechner 6 kann beispielsweise dazu eingesetzt werden, die Video-Daten weiter zu bearbeiten, d.h. diese zu verändern, neu zu ordnen oder Ähnliches.

Gegebenenfalls kann der Wunsch bestehen, daß der Rechner 6 die Kennzeichnung der Video-Daten, also den Video-Daten-Code verändert. Da es sich bei dem Video-Daten-Code um eine Dateinamen/Verzeichnisnamenstruktur handelt, kann der Rechner 6 Dateinamen und/oder Verzeichnisnamen verändern. In diesem Falle legen die Mittel 3 des Video-Datenspeichers 1 eine Zuordnungstabelle 4 an, in der die veränderten Dateinamen und der ursprüngliche Video-Daten-Code gekennzeichnet sind.

Damit können die Mittel 3 nachfolgend bei der Erzeugung des Video-Daten-Codes diese veränderten Dateinamen und/oder Verzeichnisnamen berücksichtigen und den Video-Daten-Code in gemäß der Zuordnungstabelle veränderter Weise ausgeben.

Anhand der nachfolgenden Figuren werden die Struktur des Video-Daten-Codes sowie die Arbeitsweise der Zuordnungstabelle näher erläutert.

In Fig. 2 ist ein Beispiel für einen Video-Daten-Code dargestellt, wie er von den Mitteln 3 des Video-Datenspeichers 1 gemäß Fig. 1 ausgegeben werden kann.

Die Fig. 2 zeigt eine hierarchische Verzeichnisstrukur, in der die höchste Hierarchieebene die Kennzeichnung "DayDD" trägt. Mit der Kennzeichnung "Day" wird gekennzeichnet, daß diese Hierarchieebene der Verzeichnisstruktur die Tagesangaben des Kennzeichnungscodes in dem linearen Speicher 2 trägt. Die Werte "DD" enthalten dabei die Werte des Timecodes bezüglich des Tages. Die Verzeichnisstruktur bzw. die Verzeichnisse der weiteren Hierarchieebenen tragen in entsprechender Weise die Namen "HourHH", "MinMM", SecSS" und "FrFF".

Durch diese Namen der Verzeichnisse in der Verzeichnisstruktur ist einerseits eine Zuordnung zu dem Kennzeichnungscode jederzeit möglich. Andererseits ist eine Verzeichnisstruktur gegeben, die sowohl von der Struktur her wie auch von den Verzeichnisnamen her von einem externen Rechner bzw. von dessen Betriebssystem lesbar ist.

Die niedrigste Hierarchieebene dieser Verzeichnisstruktur weist Verzeichnisnamen auf, in denen in diesem Beispiel die Vollbild-Werte gemäß des Kennzeichnungscodes enthalten sind. In einem solchen Verzeichnis finden sich dabei die Teilbilder, die zu einem derartigen Vollbild gehören. In dem Beispiel gemäß Fig. 2 sind in jedem Vollbild vier Teilbilder enthalten, die die Kennzeichnungen gemäß der Struktur "DDHHMMSSFFLL" enthalten. Dabei handelt es sich um Angaben bezüglich der Tages-, Stunden-, Minuten-, Sekunden-, Vollbild- und Teilbild-Werte gemäß dem Kennzeichnungscode. Diese Art von Dateinamen wird aus dem Kennzeichnungscode erzeugt und ist von externen Rechnern lesbar. Bei den Dateinamen gemäß der Darstellung gemäß Fig. 2 sind hinter dem Punkt weitere Angaben möglich, die in beliebiger Weise benutzt werden können. Sie können beispielsweise zur Kennzeichnung der Datenart, eines weiteren Datums oder Ähnliches eingesetzt werden.

Das Beispiel gemäß Fig. 2 zeigt diese Verzeichnisnamen/Dateinamenstruktur gemäß des Video-Daten-Codes als verallgemeinertes Beispiel. Tatsächlich sind die Werte DD, HH, MM, SS, FF und LL in dem Video-Daten-Code durch konkrete Zahlen belegt. Damit ist aufgrund dieses Video-Daten-Codes ein Zugriff auf die in dem linearen Speicher 2 der Anordnung gemäß Fig. 1 abgespeicherten Video-Daten möglich, obwohl diese Video-Daten durch einen anderen Code, nämlich dem Kennzeichnungscode, gekennzeichnet sind.

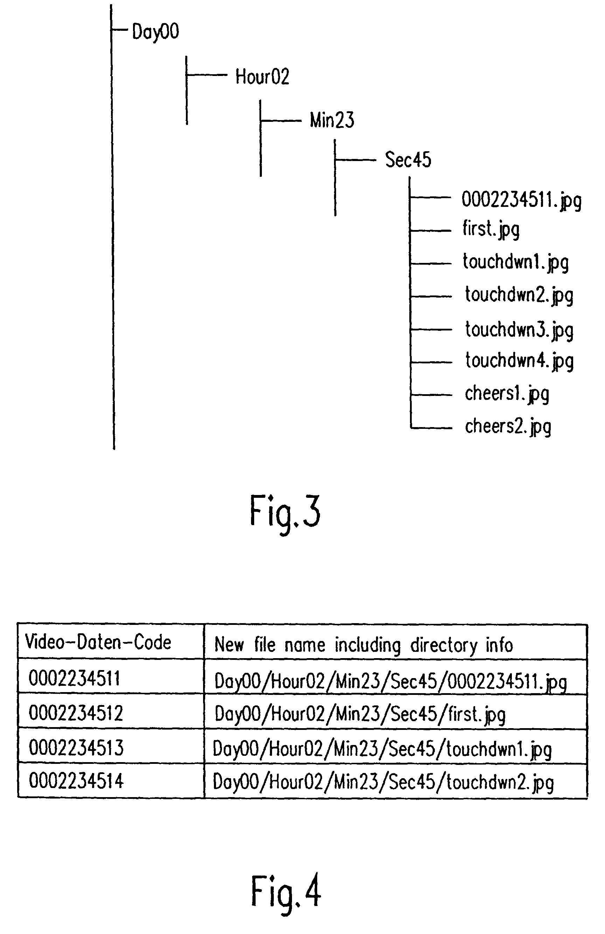

Die Fig. 3 zeigt ein Beispiel für den Video-Daten-Code ähnlich dem Beispiel in Fig. 2, in dem konkrete Werte eingesetzt sind. In dem Beispiel gemäß Fig. 3 beträgt der Tageswert 00, der Stundenwert 02, der Minutenwert 23 und der Sekundenwert 45. In diesem Beispiel sind in jedem Verzeichnis mit einem Sekundenwert die zu dieser Sekunde gemäß dem Kennzeichnungscode gehörenden Bilder abgespeichert. In dem ersten in der Fig. 3 dargestellten Dateinamen "0002234511.jpg" innerhalb des Verzeichnisses "Sec45" ist ein Dateiname entsprechend der Dateinamenstruktur gemäß Fig. 2 gewählt. Dieser Dateiname wurde also aus einem Kennzeichnungscode entwickelt, bei dem der Tageswert 00, der Stundenwert 02, der Minutenwert 23, der Sekundenwert 45 und der Bildwert 11 beträgt.

In entsprechender Weise waren auch die weiteren Dateinamen in dem Verzeichnis. "Sec45" durch den Video-Daten-Code ursprünglich gekennzeichnet.

Beispielsweise durch einen externen Rechner 6 entsprechend der Darstellung gemäß Fig. 1 sind diese Dateinamen gemäß dem Video-Daten-Code jedoch verändert worden. Es sind die gemäß Fig. 3 weiter angedeuteten Dateinamen, wie z.B. "first.jpg" gewählt worden, die die ursprünglichen gemäß dem Video-Daten-Code vorgesehene Dateinamen ersetzen.

Für externe Rechner erscheinen nun die Dateinamen in der neuen, in Fig. 3 dargestellten Weise; die Dateinamen sind also scheinbar verändert worden.

Tatsächlich haben die Mittel 3 in dem Video-Datenspeicher 1 gemäß Fig. 1 eine Zuordnungstabelle 4 angelegt, in welcher vermerkt wurde, welche ursprünglichen Dateinamen gemäß dem Video-Daten-Code durch welche neuen Dateinamen ersetzt wurden. Dies wird anhand Fig. 4 näher erläutert.

In dieser Fig. 4 ist ein Beispiel für eine Zuordnungstabelle dargestellt, wie sie beispielsweise von den Mitteln 3 des Video-Datenspeichers 1 gemäß Fig. 1 angelegt werden kann.

In der Tabelle sind in der linken Spalte "Video-Daten-Code" diejenigen Dateinamen angegeben, die die Dateien ursprünglich entsprechend des Video-Daten-Codes hatten.

In der rechten Spalte sind zugeordnet zu den ursprünglichen Dateinamen der linken Spalte diejenigen Namen angegeben, die durch einen externen Rechner gewählt wurden, die also die ursprünglichen Dateinamen ersetzen sollen.

In dem Beispiel gemäß Fig. 4 sind in der rechten Spalte zusätzlich die Verzeichnisnamen, in denen diese Dateinamen geordnet sind, gekennzeichnet.

Nachdem eine solche Zuordnungstabelle entsprechend derjenigen gemäß Fig. 4 angelegt wurde, werden in dem Video-Daten-Code anstelle der in der linken Spalte der Tabelle angegebenen Dateinamen diejenigen Dateinamen entsprechend der rechten Spalte der Tabelle ausgegeben. Für externe Geräte scheinen sich damit die Dateinamen verändert zu haben. Tatsächlich wird durch die Zuordnungstabelle lediglich eine Umsetzung des Codes in neue Dateinamen vorgenommen.

Durch die Erfindung wird somit erreicht, daß die Video-Daten, die in dem linearen Speicher 2 abgespeichert sind, in diesem weiterhin mit dem nicht veränderbaren Kennzeichnungscode abgespeichert werden können, gleichwohl aber durch äußere externe Geräte mittels eines Video-Daten-Codes gekennzeichnet sind, den diese Geräte lesen können. Darüber hinaus ist dieser Video-Daten-Code sogar veränderbar, so daß ein äußerst flexibles Arbeiten mittels der externen Geräte möglich ist.

## Patentansprüche

1. Verfahren zur Kennzeichnung von Video-Daten, welche in einem Video-Datenspeicher, vorzugsweise einem linearen Datenspeicher, mit einem Kennzeichnungscode, vorzugsweise einem Timecode, gekennzeichnet sind,
dadurch gekennzeichnet, daß für den Zugriff auf die Video-Daten durch externe Geräte der Kennzeichnungscode in einen Video-Daten-Code umgesetzt wird, in welchem die Video-Daten in Video-Dateien geordnet werden, deren Namen wenigstens Teile des jeweils zugeordneten Kennzeichnungscodes enthalten, und in welchem die Video-Dateien in Verzeichnissen geordnet werden, welche wenigstens Teile des jeweils zugeordneten Kennzeichnungscodes enthalten.

2. Verfahren nach Anspruch 1, wobei als Kennzeichnungscode ein Timecode eingesetzt wird,
dadurch gekennzeichnet, daß für den Video-Daten-Code je Teilbild des digitalen Bildsignals ein Dateiname erzeugt wird, welcher das Format DDHHMMSSFFLL.xxx aufweist, worin DD den Tages-, HH den Stunden-, MM den Minuten-, SS den Sekunden-, FF den Vollbild- und LL den Teilbild-Werten des Timecodes entsprechen.

3. Verfahren nach Anspruch 1,
dadurch gekennzeichnet, daß die Dateien in dem Video-Daten-Code in einer Verzeichnisstruktur geordnet werden, deren Verzeichnisnamen in absteigender Hierarchiefolge Tages-, Stunden-, Minuten-, Sekunden-, Vollbild- und Teilbild-Kennzeichnungen der Video-Dateien enthalten.

4. Verfahren nach Anspruch 1,
dadurch gekennzeichnet, daß der Video-Daten-Code derart gestaltet ist, daß er dem Dateien- und Verzeichniscode von Rechnern entspricht, welche in einem Server-/Client-Netzwerk miteinander kommunizieren.

5. Verfahren nach Anspruch 4,
dadurch gekennzeichnet, daß ein an das Netzwerk angeschlossener Rechner, der auf den Video-Daten-Code zugreifen kann, in der Lage ist, in dem Video-Daten-Code vorgesehene Dateinamen zu verändern und/oder in dem Video-Daten-Code vorgesehene Dateien in andere in dem Video-Daten-Code vorgesehene Dateiverzeichnisse zu verschieben und daß in diesem Falle eine Zuordnungstabelle angelegt wird, in welcher die Veränderungen vermerkt werden und gemäß welcher der Video-Daten-Code für die betreffenden Dateien in veränderter Form ausgegeben wird.

6. Video-Datenspeicher, in welchem Video-Daten, vorzugsweise linear, abgespeichert sind, welche mit einem Kennzeichnungscode, vorzugsweise einem Timecode, gekennzeichnet sind,
dadurch gekennzeichnet, daß Mittel (3) zur Erzeugung eines Video-Daten-Codes aus dem Kennzeichnungscode vorgesehen sind, welche an externe Geräte (6) den Video-Daten-Code senden, gemäß welchem die Video-Daten in Video-Dateien geordnet werden, deren Namen wenigstens Teile des jeweils zugeordneten Kennzeichnungscodes enthalten, und gemäß welchem die Video-Dateien in Verzeichnissen geordnet werden, welche wenigstens Teile des jeweils zugeordneten Kennzeichnungscodes enthalten.

7. Video-Datenspeicher nach Anspruch 6,
dadurch gekennzeichnet, daß externe, insbesondere über ein Netzwerk (5) angeschlossene, Geräte (6) in der Lage sind, auf den Video-Daten-Code zuzugreifen und in dem Video-Daten-Code vorgesehene Dateinamen verändern und/oder in dem Video-Daten-Code vorgesehene Dateien in andere in dem Video-Daten-Code vorgesehene Dateiverzeichnisse zu verschieben, daß die Mittel (3) zur Erzeugung des Video-Daten-Codes in diesem Falle eine Zuordnungstabelle (4) anlegen, in welcher die Veränderungen vermerkt werden und daß die Mittel (3) zur Erzeugung des Video-Daten-Codes den Video-Daten-Code für die betreffenden Dateien in gemäß der Zuordnungstabelle (4) veränderter Form ausgeben.
